# EUROPÄISCHE PATENTSCHRIFT

(11) **EP 1 388 655 B1**
(45) Veröffentlichungstag und Bekanntmachung des Hinweises auf die Patenterteilung: **25.04.2007**
(21) Anmeldenummer: 03014996.7
(22) Anmeldetag: 02.07.2003
(51) Int. Cl.: F02B 67/06, F01P 5/12

(54) **Brennkraftmaschine mit einer Antriebsanordnung für Aggregat-Module**
Internal combustion engine with an arrangement for an auxiliary module
Moteur à combustion interne avec un agencement d'un module d'un agrégat

(30) Priorität: 10.08.2002 DE 10236746
(43) Veröffentlichungstag der Anmeldung: 11.02.2004
(73) Patentinhaber: Bayerische Motoren Werke Aktiengesellschaft, 80809 München (DE); Peugeot Citroen Automobiles Société Anonyme, 78140 Velizy Villacoublay (FR)
(72) Erfinder: Lemberger, Heinz, 85774 Unterföhring (DE)

(56) Entgegenhaltungen:
- DE-A- 3 934 884
- DE-A- 10 051 977
- US-A- 2 823 546
- US-A- 3 603 296
- US-A- 6 000 373
- PATENT ABSTRACTS OF JAPAN Bd. 2000, Nr. 12, 3. Januar 2001 (2001-01-03) & JP 2000 257553 A (SEIKO SEIKI CO LTD), 19. September 2000 (2000-09-19)

## Beschreibung

Die Erfindung betrifft eine Brennkraftmaschine mit einer Antriebsanordnung für Aggregat-Module, wobei mindestens ein Aggregat eines ersten Moduls mittels eines Hülltriebes (Riemen, Kette ) von einem Triebrad an einer Brennkraftmaschinen-Welle (Kurbelwelle) angetrieben ist, und ferner ein Nebenaggregat (Wasserpumpe) eines zweiten Moduls über ein mit der Außenseite des Hülltriebes kraftund/oder formschlüssig zusammenwirkendes Triebrad in Antriebsverbindung steht.

Eine derartige Anordnung ist beispielsweise aus der DE - AS 21 13 533 bekannt für einen Zahnriementrieb zwischen einer Kurbelwelle und einer Nockenwelle einer Brennkraftmaschine, wobei der an seiner Außenseite ein Poly-V-Profil aufweisende Zahnriemen mit einem entsprechen profilierten Triebrad einer Kühlmittel- bzw. Wasserpumpe in Antriebsverbindung steht. Da dieses Triebrad zugleich als Riemenspannrad dient, ist die Wasserpumpe als Nebenaggregat des zweiten Moduls relativ zur Brennkraftmaschine verschiebebeweglich angeordnet.

Aus der DE - OS 25 24 668 ist ein weiterer Zahnriementrieb für Brennkraftmaschinen bekannt, wobei der Zahnriemen mit seiner gezähnten Seite im ersten Modul zum Antrieb der Zahnräder einer Nockenwelle und einer Einspritzpumpe dient und mit seiner ungezähnten Rückseite zum Antrieb eines Triebrades z.B. einer Ölpumpe.

Während die vorgenannten Beispiele jeweils einen zwei Module umfassenden Einriementrieb aufzeigen, ist aus der DE - OS 28 46 775 eine zwei Riemenebenen umfassende Antriebsanordnung bekannt, bei der ein für Aggregate in zwei Modulen dienender Zahnriemen über seine glatte Außenseite mit einem als Spannrolle dienenden Triebrad eines Gebläserades in Antriebsverbindung steht.

Ferner ist aus der DE - OS 26 55 102 eine Antriebsanordnung für Aggregat-Module bekannt mit einer Kette als Hülltrieb, wobei das Nebenaggregat über ein in die Außenseite der Kette eingreifendes Ketten-Triebrad angetrieben ist.

Schließlich zeigt und beschreibt die deutsche Patentschrift DE 196 30 221 C 1 ein Reibradgetriebe für einen Anlasser einer Verbrennungskraftmaschine, wobei eine leerlaufende Reibrolle innenseitig und eine angetriebene Reibrolle außenseitig mit einem dünnwandig zylindrisch gestalteten Anlasserkranz gesteuert in Eingriff bringbar sind. Als älterer Stand der Technik hierzu ist die US 2,075,865 bekannt, die einen profilierten Anlasserkranz zeigt zum kraft- bzw. reibschlüssigen Eingriff entsprechend angepasster Reibrollen.

Das der Erfindung zugrundeliegende Problem ist, dass insbesondere bei Einriementrieben das kleinste Aggregat als Nebenaggregat bezüglich der Lagerkräfte auf das leistungsstärkste Aggregat auszulegen ist. So ist z.B. das Lauflager einer Kühlwasserpumpe entsprechend dem für einen mechanischen Lader oder einem Riemen - Startergenerator erforderlichen Riemenzug zu dimensionieren.

Der Erfindung liegt die Aufgabe zugrunde, eine Antriebsanordnung für Aggregat-Module derart weiterzubilden, dass Nebenaggregate mit geringem Leistungsbedarf bei dementsprechender Gestaltung ohne Risiko an Betriebssicherheit in die Antriebsanordnung integriert werden können.

Diese Aufgabe ist mit dem Patentanspruch 1 dadurch gelöst, dass das Nebenaggregat des zweiten Moduls mittels eines Rädergetriebes antreibbar ist, das ein mit der Außenseite des Hülltriebes im Umschlingungsbereich eines Triebrades der Brennkraftmaschine oder eines Aggregates des ersten Moduls kraft- und/oder formschlüssig zusammenwirkendes Zwischenrad umfasst, das seinerseits mit dem Antriebsrad des Nebenaggregates des zweiten Moduls in kraft- und/oder formschlüssiger Antriebsverbindung steht.

Mit der Erfindung kann in vorteilhafter Weise ein Nebenaggregat von geringem Leistungsbedarf im zweiten Modul angeordnet und entsprechend den mit dem erfindungsgemäßen Rädergetriebe verbundenen geringeren Antriebsbelastungen kostengünstig dimensioniert werden.

Gemäß einem bevorzugten Vorschlag ist das Nebenaggregat eine Wasserpumpe mit einem Antriebsrad, das über das Zwischenrad mit der Außenseite eines Riemens als Hülltrieb im Umschlingungsbereich einer mit einer Kurbelwelle der Brennkraftmaschine verbundenen Riemenscheibe als Treibrad in Antriebsverbindung steht. Mit dieser Anordnung sind dynamisch bedingte Querbewegungen vom erfindungsgemäßen Rädergetriebe vorteilhaft ferngehalten.

Eine weitere vorteilhafte Ausgestaltung sieht vor, dass das Zwischenrad relativ zur Brennkraftmaschine oder einem Aggregat des ersten Moduls derart beweglich angeordnet ist, dass das vom jeweiligen Hülltrieb im jeweiligen Umschlingungsbereich des jeweiligen Triebrades in dessen jeweiliger Drehrichtung mitnehmbar gegen das Antriebsrad des Nebenaggregates gedrückt ist. Mit dieser Ausgestaltung ist vorteilhafter Weise erreicht, dass das Zwischenrad drehzahlabhängig stark gegen das Antriebsrad des Nebenaggregates bzw. der Kühlwasserpumpe gedrückt wird und somit ein Servoeffekt erzielt ist.

Zur Anpassung einer bedarfsweisen Drehzahl des Nebenaggregates im Drehzahlbereich der Brennkraftmaschine kann das Zwischenrad in weiterer Ausgestaltung für einen mehrfach übersetzenden oder untersetzenden Antrieb des Nebenaggregates ausgebildet sein. Als bekannte, einfache Ausgestaltungen bieten sich hierfür gestufte oder kegelförmige Zwischenräder an, die beispielsweise in reibschlüssiger Antriebsverbindung wirken.

Hinsichtlich einer Leistungs- und Kraftstoff-Einsparung wird auch vorgeschlagen, dass das Zwischenrad bei Bedarf drehzahl- und/oder lastabhängig mittels einer steuerbaren Einrichtung außer Eingriff mit dem Antriebsrad des Nebenaggregates, insbesondere der Wasserpumpe gehalten ist.

Derselben Zielrichtung dient ferner, dass das Rädergetriebe des Nebenaggregates bzw. der Wasserpumpe im jeweiligen Antriebsrad eine schaltbare Kupplung umfasst, die in Abhängigkeit von Parametern der Brennkraftmaschine und/oder des Nebenaggregates - insbesondere bei Kaltstart und Hochdrehzahl - gesteuert getrennt ist.

Eine vorteilhafte Kombination ist mit der Erfindung ferner dadurch erreicht, dass das Zwischenrad des Rädergetriebes des zweiten Moduls mit einem Einriementrieb des ersten Moduls in Antriebsverbindung steht, wobei das erste Modul als Aggregat einen Riemen-Startergenerator umfasst sowie ggf. einen Klimakompressor und entsprechend angeordnete Riemen-Spannrollen.

Mit der erfindungsgemäßen Antriebsgestaltung des zweiten Moduls ist als weiterer Vorteil festzustellen, dass beim ersten Modul sich kürzere Riemenlängen bei einfacher Ausgestaltung ergeben. Unterstützt ist dies für den Einriementrieb durch einen elastischen Riemen mit glatter Außenseite oder durch einen üblichen, mit Spannrollen kombinierten Riemen mit längs - oder querprofilierter Außenseite.

Mit der Erfindung ist ein hoch flexibles System von niedrigen Kosten und günstigem, bedarfsorientiertem Gewicht erzielt.

Die Erfindung ist anhand von in der Zeichnung schematisch dargestellten Beispielen beschrieben. Es zeigt:
Fig.1 eine erfindungsgemäße Antriebsanordnung mit einem Generator im ersten Modul und einer Wasserpumpe im zweiten Modul,
Fig.2 eine Weiterbildung nach Fig.1 mit einem Klimakompressor im zweiten Modul,
Fig.3 eine Weiterbildung nach Fig.2 mit einem Riemen-Startergenerator im zweiten Modul.

Eine nicht dargestellte Brennkraftmaschine ist mit einer Antriebsanordnung für Aggregat-Module ausgerüstet, wobei mindestens ein Aggregat 1 eines ersten Moduls mittels eines Hülltriebes 2 - vorzugsweise Riemen 2' - von einem Triebrad 3 an einer Kurbelwelle 4 der Brennkraftmaschine angetrieben ist. Ferner steht ein Nebenaggregat 5 - z.B. Kühlwasserpumpe - eines zweiten Moduls über ein mit der Außenseite 6 des Riemens 2' kraft- und/oder formschlüssig zusammenwirkendes Triebrad in Antriebsverbindung.

Um das Nebenaggregat 5 mit geringem Leistungsbedarf bei dementsprechender Gestaltung ohne Risiko an Betriebssicherheit in die Antriebsanordnung integrieren zu können, wird erfindungsgemäß vorgeschlagen, dass das Nebenaggregat bzw. die Wasserpumpe 5 des zweiten Moduls mittels eines Rädergetriebes 7 antreibbar ist, das ein mit der Außenseite 6 des Riemens 2' im Umschlingungsbereich 8 des Triebrades 3 der Brennkraftmaschine kraft- und/oder formschlüssig zusammenwirkendes Zwischenrad 9 umfasst, das seinerseits mit dem Antriebsrad 10 der Wasserpumpe 5 des zweiten Moduls in kraft- und/oder formschlüssiger Antriebsverbindung steht.

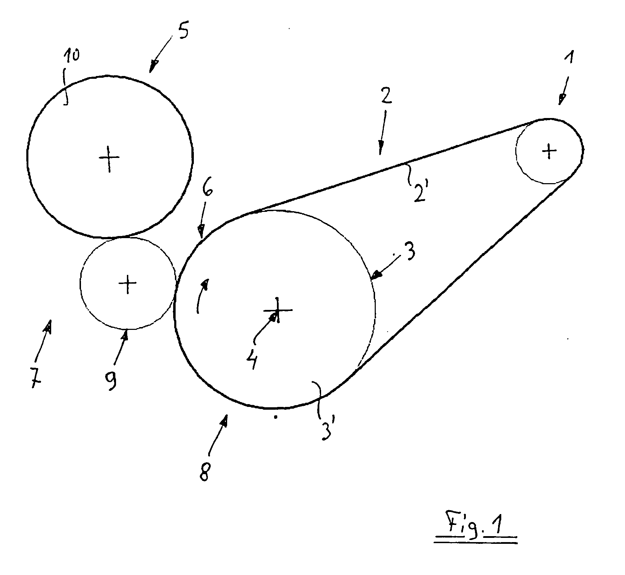

Wie aus Figur 1 ersichtlich, wirkt das Antriebsrad 10 der Wasserpumpe 5 mit dem Zwischenrad 9 zusammen, das mit der Außenseite 6 des Riemens 2' im Umschlingungsbereich 8 einer mit der Kurbelwelle 4 der Brennkraftmaschine verbundenen Riemenscheibe 3' als Triebrad 3 in Antriebsverbindung steht.

Zur Erzielung eines Servoeffektes ist das Zwischenrad 9 relativ zur Brennkraftmaschine derart beweglich angeordnet (nicht gezeigt ), dass das vom Riemen 2' im Umschlingungsbereich 8 der Riemenscheibe 3' in dessen Drehrichtung mitnehmbar gegen das Antriebsrad 10 der Wasserpumpe 5 gedrückt ist, wobei der Andruck drehzahlabhängig ist

Das erfindungsgemäße Rädergetriebe 7 kann auch über- oder untersetzend gestaltet sein, wofür das Zwischenrad 9 entweder zwei- oder mehrstufig oder kegelförmig als jeweiliges Reibrad ausgebildet ist.

Um insbesondere die Wasserpumpe 5 bei Kaltstart und Hochdrehzahl der Brennkraftmaschine von deren Drehzahl abkoppeln zu können, ist zum einen vorgesehen, dass das Zwischenrad 9 mittels einer nicht gezeigten, steuerbaren Einrichtung außer Eingriff mit dem Antriebsrad 10 der Wasserpumpe 5 gehalten ist.
Zum anderen kann das Antriebsrad 10 der Wasserpumpe 5 mit einer schaltbaren Kupplung (nicht dargestellt) ausgerüstet sein, die drehzahl- oder lastabhängig gesteuert trennbar ist. Denkbar hierfür ist eine Magnetkupplung oder eine Fliehkraftkupplung, ferner eine mittels Motoröldruck gesteuerte Hydraulikkupplung oder eine themostatisch gesteuerte Kupplung. Damit kann die Wasserpumpe 5 bei Hochdrehzahl der Brennkraftmaschine zur Reduzierung unnötigen Leistungsaufwandes abgekoppelt werden, und ferner bei Kaltstart der Brennkraftmaschine zu deren schnelleren Erwärmung.

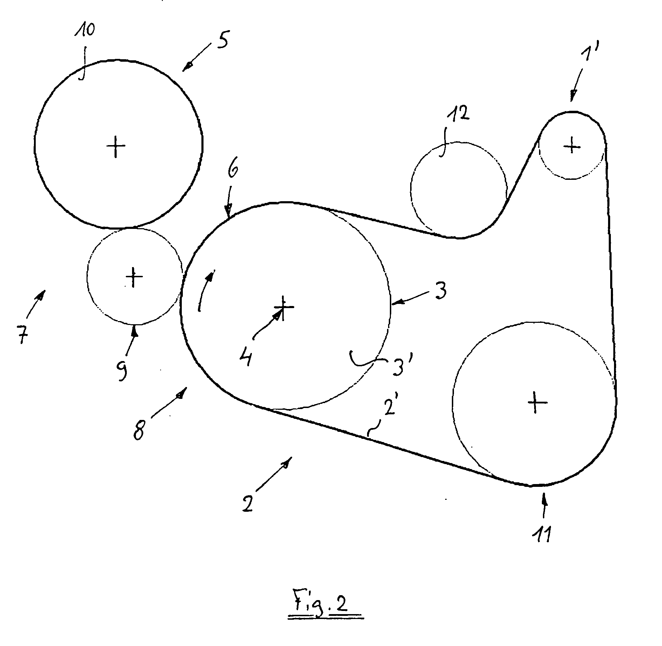

Eine baulich einfache Antriebsanordnung ist mit der Erfindung ferner dadurch erzielt, dass das Zwischenrad 9 des Rädergetriebes 7 des zweiten Moduls mit einem Einriementrieb des ersten Moduls in Antriebsverbindung steht, wobei das erste Modul gemäß Figur 2 neben einem Generator 1' einen Klimakompressor 11 sowie wenigstens eine Spannrolle 12 umfasst.

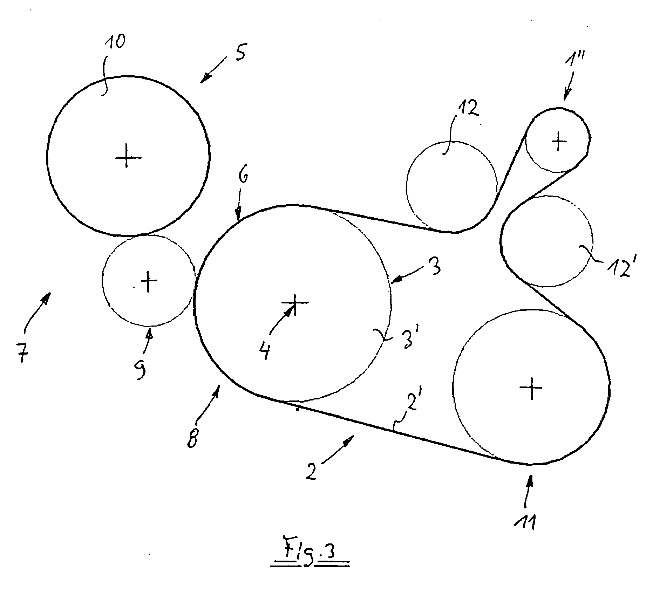

In Figur 3 umfasst der Einriementrieb mit dem Riemen 2' neben dem Klimakompressor 11 einen Riemen-Startgenerator 1" sowie eine zusätzliche Spannrolle 12' zur Vergrößerung der Riemen - Umschlingung des generatorseitigen Triebrades.

Der jeweilige Einriementrieb kann einen elastischen Riemen mit glatter Außenseite aufweisen oder aber einen üblichen, mit Spannrollen 12, 12' kombinierten Riemen 2' mit längs- oder querprofilierter Außenseite 6 zum kraft- oder formschlüssigen Zusammenwirken mit dem Zwischenrad 9 für ein ebenfalls kraft- oder formschlüssiges Zusammenwirken mit dem Antriebsrad 10 der Wasser-pumpe 5.

## Patentansprüche

1. Brennkraftmaschine mit einer Antriebsanordnung für Aggregat-Module,
- wobei mindestens ein Aggregat (1) eines ersten Moduls mittels eines Hülltriebes (2 , Riemen, Kette) von einem Triebrad (3) an einer Brennkraftmaschinen - Welle (Kurbelwelle 4) angetrieben ist, und
- ferner ein Nebenaggregat (5, Wasserpumpe) eines zweiten Moduls über ein mit der Außenseite (6) des Hülltriebes (2) kraft- und/oder formschlüssig zusammenwirkendes Triebrad in Antriebsverbindung steht,
**dadurch gekennzeichnet,**
- **dass** das Nebenaggregat (5) des zweiten Moduls mittels eines Rädergetriebes (7) antreibbar ist, das
- ein mit der Außenseite (6) des Hülltriebes (2) im Umschlingungsbereich (8) des Triebrades (3) der Brennkraftmaschine oder des Aggregates des ersten Moduls kraft- und/oder formschlüssig zusammenwirkendes Zwischenrad (9) umfasst, das
- seinerseits mit dem Antriebsrad (10) des Nebenaggregates (5) des zweiten Moduls in kraft- und/oder formschlüssiger Antriebsverbindung steht.

2. Brennkraftmaschine nach Anspruch 1, **dadurch gekennzeichnet,**
- **dass** das Nebenaggregat (5) eine Wasserpumpe ist mit einem Antriebsrad (10), das
- über das Zwischenrad (9) mit der Außenseite (6) eines Riemens (2') als Hülltrieb (2) im Umschlingungsbereich (8) einer mit einer Kurbelwelle (4) der Brennkraftmaschine verbundenen Riemenscheibe (3') als Treibrad (3) in Antriebsverbindung steht.

3. Brennkraftmaschine nach Anspruch 1 oder 2,**dadurch gekennzeichnet,**
- **dass** das Zwischenrad (9) relativ zur Brennkraftmaschine oder einem Aggregat (1) des ersten Moduls derart beweglich angeordnet ist,
- **dass** das vom jeweiligen Hülltrieb (2) im jeweiligen Umschlingungsbereich (8) des jeweiligen Triebrades (3) in dessen jeweiliger Drehrichtung mitnehmbar gegen das Antriebsrad (10) des Nebenaggregates (5) gedrückt ist.

4. Brennkraftmaschine nach den Ansprüchen 1 - 3, **dadurch gekennzeichnet,**
- **dass** das Zwischenrad (9) für einen mehrfach übersetzenden oder untersetzenden Antrieb des Nebenaggregates (5) ausgebildet ist.

5. Brennkraftmaschine nach einem der Ansprüche 1 - 4, **dadurch gekennzeichnet, dass** das Zwischenrad (9) bei Bedarf drehzahl - und/oder lastabhängig mittels einer steuerbaren Einrichtung außer Eingriff mit dem Antriebsrad (10) des Nebenaggregates (5), insbesondere der Wasserpumpe, gehalten ist.

6. Brennkraftmaschine nach den Ansprüchen 1 - 4, **dadurch gekennzeichnet,**
- **dass** das Rädergetriebe (7) des Nebenaggregates (5) bzw. der Wasserpumpe im jeweiligen Antriebsrad (10) eine schaltbare Kupplung umfasst,
- die in Abhängigkeit von Parametern der Brennkraftmaschine und/oder des Nebenaggregates (5) - insbesondere bei Kaltstart und Hochdrehzahl - gesteuert getrennt ist.

7. Brennkraftmaschine nach den Ansprüchen 1 - 6, **dadurch gekennzeichnet,**
- **dass** das Zwischenrad (9) des Rädergetriebes (7) des zweiten Moduls mit einem Einriementrieb des ersten Moduls in Antriebsverbindung steht, wobei
- das erste Modul als Aggregat (1) einen Riemen-Startergenerator (1") umfasst sowie
- ggf. einen Klimakompressor (11) und entsprechend angeordnete Riemen - Spannrollen (12, 12').

8. Brennkraftmaschine nach den Ansprüchen 1 - 7, **dadurch gekennzeichnet,**
- **dass** für den Einriementrieb ein elastischer Riemen mit glatter Außenseite oder
- ein üblicher, mit Spannrollen (12, 12') kombinierter Riemen (2') mit längs- oder querprofilierter Außenseite (6) verwendet ist.

## Claims

1. An internal combustion engine with a drive arrangement for unit modules,
- wherein at least one unit (1) of a first module is driven via an envelope drive (2, belt, chain) by a drive wheel (3) on an engine shaft (crankshaft 4), and
- an auxiliary unit (5, water pump) of a second module is in drive connection via a drive wheel positively and/or non-positively co-operating with the outside (6) of the envelope drive (2),
**characterised in that**
- the auxiliary unit (5) of the second module is drivable by gearing (7), which
- comprises an intermediate wheel (9) positively and/or non-positively co-operating with the outside (6) of the envelope drive (2) in the looped or contact area (8) of the drive wheel (3) of the engine or of the unit of the first module,
- the intermediate wheel being in positive and/or non-positive drive connection with the driving wheel (10) of the auxiliary unit (5) of the second module.

2. An engine according to claim 1, **characterised in that**
- the auxiliary unit (5) is a water pump with a driving wheel (10), which
- via the intermediate wheel (9) is in drive connection with the outside (6) of an envelope drive (2) in the form of a belt (2') in the contact area (8) of a drive wheel (3) in the form of a belt pulley (3') connected to a crankshaft (4) of the engine.

3. An engine according to claim 1 or claim 2, **characterised in that**
- the intermediate wheel (9), relative to the engine or to a unit (1) of the first module, is movable so that
- the [intermediate wheel] entrained by the respective envelope drive (2) in the respective contact region (8) of the respective drive wheel (3) in the respective direction of rotation thereof is pressed against the driving wheel (10) of the auxiliary unit (5).

4. An engine according to claims 1 - 3, **characterised in that**
- the intermediate wheel (9) is designed for a multiple step-up or step-down drive of the auxiliary unit (5).

5. An engine according to any of claims 1 to 4, **characterised in that**
- the intermediate wheel (9), when required and in dependence on the speed and/or load, is held out of engagement with the driving wheel (10) of the auxiliary unit (5), especially the water pump, by means of a controllable device.

6. An engine according to claims 1 - 4, **characterised in that**
- the gearing (7) of the auxiliary unit (5) or of the water pump in the respective driving wheel (10) comprises an engageable clutch
- which is disengaged in controlled manner in dependence on parameters of the engine and/or the auxiliary unit (5), especially during a cold start or revving up to maximum speed.

7. An engine according to claims 1 - 6, **characterised in that**
- the intermediate wheel (9) of the gearing (7) of the second module is in drive connection with a single-belt drive of the first module, wherein
- the first module or unit (1) comprises a belt starter generator (1") and
- if required also comprises an air-conditioning compressor (11) and suitably disposed belt pulleys (12, 12').

8. An engine according to claims 1 - 7, **characterised in that**
- a resilient belt with a smooth outside or
- a conventional belt (2') combined with belt pulleys (12, 12') and with a longitudinally or transversely profiled outside (6) is used for the single-belt drive.

## Revendications

1. °Moteur à combustion interne avec un dispositif d'entraînement de module d'ensemble, dans lequel au moins un ensemble (1) d'un premier module est entraîné au moyen d'un entraînement par moyen de traction (2) (courroie, chaîne) d'une roue motrice (3) sur un arbre de moteur à combustion interne (vilebrequin 4), et en outre un ensemble secondaire (5, pompe à eau) d'un second module est en liaison d'entraînement par une roue motrice coopérant par adhérence et/ou complémentarité de forme avec le côté extérieur (6) de l'entraînement par moyen de traction (2),
**caractérisé en ce que**
l'ensemble secondaire (5) du second module peut être entraîné au moyen d'un engrenage (7) qui comprend une roue intermédiaire (9) coopérant par adhérence et/ou complémentarité de forme avec le côté extérieur 6 de l'entraînement par moyen de traction (2) dans la zone d'enroulement (8) de la roue motrice (3) du moteur à combustion interne ou de l'ensemble du premier module, laquelle roue intermédiaire (9) de son côté est en relation d'entraînement par adhérence et/ou complémentarité de forme avec la roue d'entraînement (10) de l'ensemble secondaire (5) du second module.

2. Moteur à combustion interne selon la revendication 1,
**caractérisé en ce que**
l'ensemble secondaire (5) est une pompe à eau avec une roue d'entraînement (10) qui est en relation d'entraînement comme roue motrice (3) par la roue intermédiaire (9) avec le côté extérieur (6) d'une courroie (2') comme entraînement par moyen de traction (2) dans la zone d'enroulement (8) d'une poulie (3') reliée à un vilebrequin (4) du moteur à combustion interne.

3. Moteur à combustion interne selon la revendication 1 ou 2,
**caractérisé en ce que**
la roue intermédiaire (9) est placée de manière mobile par rapport au moteur à combustion interne ou à un ensemble (1) du premier module de façon à ce qu'elle soit poussée contre la roue d'entraînement (10) de l'ensemble secondaire (5) par l'entraînement par moyen de traction (2) respectif dans chaque zone d'enroulement (8) de la roue motrice (3) respective en pouvant être entraînée dans son sens de rotation respectif.

4. Moteur à combustion interne selon l'une des revendications 1 à 3,
**caractérisé en ce que**
la roue intermédiaire (9) est formée pour un entraînement à démultiplication ou à réduction de vitesses de l'ensemble secondaire (5).

5. Moteur à combustion interne selon l'une des revendications 1 à 4,
**caractérisé en ce que**
si besoin, la roue intermédiaire (9), en fonction du régime et/ou de la charge, est maintenue désengagée de la roue d'entraînement (10) de l'ensemble secondaire (5), particulièrement de la pompe à eau, au moyen d'un dispositif commandable.

6. Moteur à combustion interne selon l'une des revendications 1 à 4,
**caractérisé en ce que**
l'engrenage (7) de l'ensemble secondaire (5) ou de la pompe à eau comprend dans chaque roue d'entraînement (10) un couplage pouvant être commuté et commandé séparément en fonction de paramètres du moteur à combustion interne et/ou de l'ensemble secondaire (5), notamment en cas de démarrage à froid et de haut régime.

7. Moteur à combustion interne selon l'une des revendications 1 à 6,
**caractérisé en ce que**
la roue intermédiaire (9) de l'engrenage (7) du second module est en relation d'entraînement avec un entraînement par courroie unique du premier module, dans lequel le premier module comprend comme ensemble (1) un démarreur-générateur de courroie (1") ainsi que le cas échéant un compresseur de climatisation (11) et des tendeurs de courroie (12, 12') placés de manière correspondante.

8. Moteur à combustion interne selon l'une des revendications 1 à 7,
**caractérisé en ce que**
pour l'entraînement par courroie unique on emploie une courroie élastique avec un côté extérieur lisse ou une courroie habituelle combinée à des tendeurs (12, 12') avec un côté extérieur (6) profilé longitudinalement ou transversalement.
